Europäisches Patentamt

European Patent Office

Office européen des brevets

(11) Publication number: **0 169 421**
**B1**

## (12) EUROPEAN PATENT SPECIFICATION

(45) Date of publication of patent specification: **31.05.89**

(21) Application number: **85108358.4**

(22) Date of filing: **05.07.85**

(51) Int. Cl.⁴: **G 21 C 7/10**

(54) Control rod for a nuclear reactor.

(30) Priority: **26.07.84 US 634725**

(43) Date of publication of application:
**29.01.86 Bulletin 86/05**

(45) Publication of the grant of the patent:
**31.05.89 Bulletin 89/22**

(84) Designated Contracting States:
**BE DE FR GB IT SE**

(56) References cited:
**FR-A-2 255 679**
**FR-E- 91 259**
**US-A-2 879 216**
**US-A-4 292 132**
**US-A-4 311 560**

(73) Proprietor: **WESTINGHOUSE ELECTRIC CORPORATION**
**Westinghouse Building Gateway Center**
**Pittsburgh Pennsylvania 15222 (US)**

(72) Inventor: **Cerni, Samuel**
**101, Kingsdale Road**
**Pittsburgh Pennsylvania 15221 (US)**

Inventor: **Wilson, John Francis**
**3560 Meadowgate Drive**
**Murrysville Pennsylvania 15668 (US)**

Inventor: **Gjertsen, Robert Kenneth**
**126 Penn Lear Drive**
**Monroeville Pennsylvania 15146 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to nuclear reactors and, more particularly, to an improved control rod therefor.

In a typical nuclear reactor, the reactor core is composed of a plurality of elongate fuel assemblies each of which contains a plurality of elongate fuel elements or rods. A liquid coolant is pumped upwardly through the core in order to extract heat from the core for the production of useful work. The heat output of the core is usually regulated by the movement of control rods containing neutron absorbing material, such as $B_4C$, or by movement of water displacer rods such as described in U.S. Patent No. 4,432,934. In reactors of the pressurized-water type, each fuel assembly typically includes a plurality of guide tubes or thimbles in which the control rods or water displacer rods are reciprocably movable. Some of the reactor coolant is usually diverted into the lower ends of the guide thimbles in order to cool the control rods therein.

During operation of the reactor, most of the regulating control rods are maintained substantially withdrawn from the reactor core to an extent placing the tips of their lower end plugs within upper end portions of the guide thimbles. While in such withdrawn positions, the control rods may experience considerable vibration induced by the flow of coolant water through the guide thimbles and past the control rod portions therein bearing the end plugs. This vibration of the control rods causes the tips of their end plugs to make oscillatory contact with the inner wall surfaces of the guide thimbles; this results in wear and eventually may lead to perforation of the thimble walls and a significant weakening of the fuel assembly structure.

Attempts to alleviate this problem have been made, such as set forth in U.S. Patent Specification Nos. 4,292,132 and 4,311,560, both of which propose to eliminate wear on the guide thimble walls by preventing the control rods as such from striking the guide thimble walls. Thus, U.S. Patent Specification No. 4,311,560 proposes to add on the lower end of each control rod a spring device which provides a uniform, resilient interference fit against the guide thimble wall and thereby prevents the rod tip from impacting it. In accordance with the teachings of U.S. Patent Specification No. 4,292,132, the control rod has formed at its lower tip a hydraulic bearing adapted to produce forces which counteract forces tending to drive the control rod tip against the guide thimble wall.

It is the principal object of the invention to provide a simpler and less costly yet effective solution to the above-mentioned wear problem.

The invention accordingly resides in a control rod for use in a nuclear reactor having means for supporting the control rod for axial movement thereof in a guide thimble, said control rod including a cladding member and an end plug which is affixed to the lower end of the cladding member, said end plug being located within the guide thimble when in use, and striking the guide thimble upon lateral vibration of the control rod, characterized in that said end plug has thereon a wear sleeve which provides a contact interface between the end plug and the guide thimble and is formed of the same material as the guide thimble.

Thus, and unlike the earlier approaches which require special means for preventing direct vibratory contact between the control-rod end plug and the guide thimble, the invention teaches to provide a contact interface formed by a simple sleeve which is made of a similar material as the guide thimble, whereby wear due to vibratory contact between control-rod end plug and the guide thimble is minimized.

Whilst the sleeve on the end plug and the control thimble are made of the same material, such as stainless steel, the end plug itself and the control rod cladding to which it is affixed and sealed are likely to consist of a material, such as Zircaloy, which is dissimilar to the material of the sleeve. Since dissimilar materials do not lend themselves well to being joined through welding, the sleeve is affixed to the end plug by means of an interlock connection preferably comprising an annular groove formed in the peripheral surface of the end plug, and a single peripheral bulge formed on the inner surface of the sleeve and lodged in said groove.

The sleeve preferably has an inner diameter such as to leave between it and the end plug a gap sufficient for reactor coolant to enter therein and to dampen impacts between the sleeve and the guide thimble.

A preferred embodiment of the invention will now be described, by way of example only, with reference to the accompanying drawings, in which:—

Figure 1 is an elevational view of a fuel assembly shown in vertically foreshortened form and with parts broken away for clarity;

Fig. 2 is an enlarged, top plan view of a spider assembly which supports the control rods of the fuel assembly;

Fig. 3 is a sectional view of the spider assembly as taken along line 3—3 of Fig. 2;

Fig. 4 is an enlarged, fragmentary view, taken along line 4—4 of Fig. 3, of an end portion of one of the control rods including an end plug embodying the invention; and

Fig. 5 is an enlarged, sectional view of the end plug as taken along line 5—5 of Fig. 4.

In the following description, like reference characters designate like or corresponding parts throughout the several views of the drawings, and terms such as "forward", "rearward", "left", "right", "upwardly", "downwardly", and the like are used as words of convenience not to be construed as limiting terms.

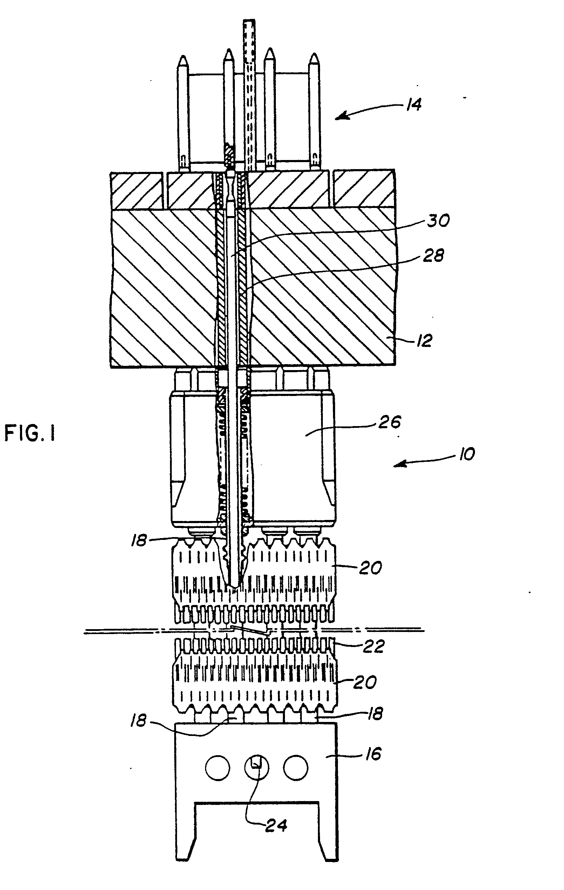

Referring now to the drawings, and particularly to Fig. 1, there is shown an overall combination of a fuel assembly, generally designated with reference numeral 10, an upper core support plate 12 disposed above and extending across the top of fuel assembly 10, and a spider assembly 14 disposed above the upper core support plate.

The fuel assembly 10 comprises a lower end structure or bottom nozzle 16 for supporting the assembly on a lower core plate (not shown) in the core region of a reactor (not shown); a plurality of guide tubes or thimbles 18 projecting upward from the bottom nozzle 16; a plurality of transverse grids 20 axially spaced along the guide thimbles 18; an organized array of elongate fuel rods 22 transversely spaced and supported by the grids 20; an instrumentation tube 24 in the center of the fuel assembly; and an upper end structure or top nozzle 26 affixed to the upper ends of the guide thimbles 18.

The upper core support plate 12 extends across all of the fuel assemblies, such as assembly 10, within the reactor core. It has therein a multiplicity of coolant flow passages, such as at 28, and each guide thimble 18 has one such passage 28 in axial alignment therewith to enable insertion of a control rod 30 therethrough.

At their upper ends, the control rods 30 are connected to the spider assembly 14 which supports the rods for axial movement thereof within the guide thimbles 18, such movement being effected by means of a conventional drive mechanism (not shown).

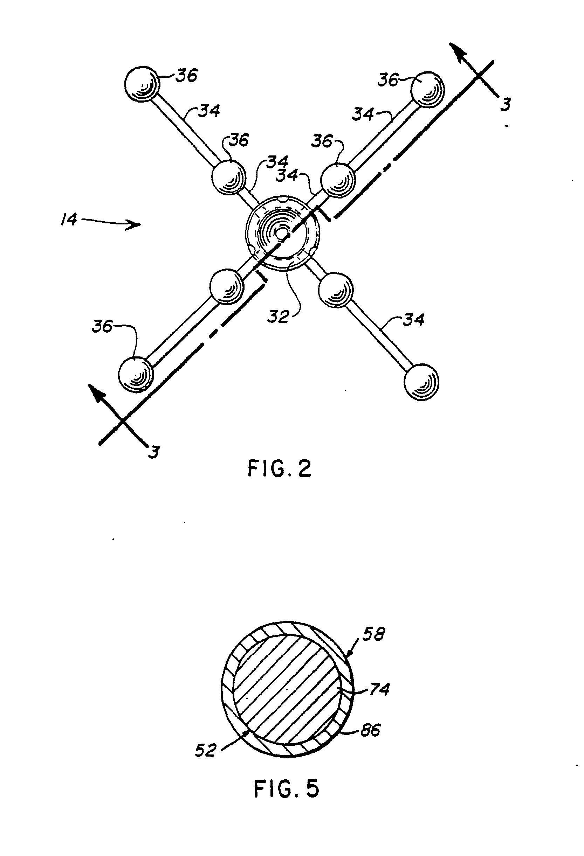

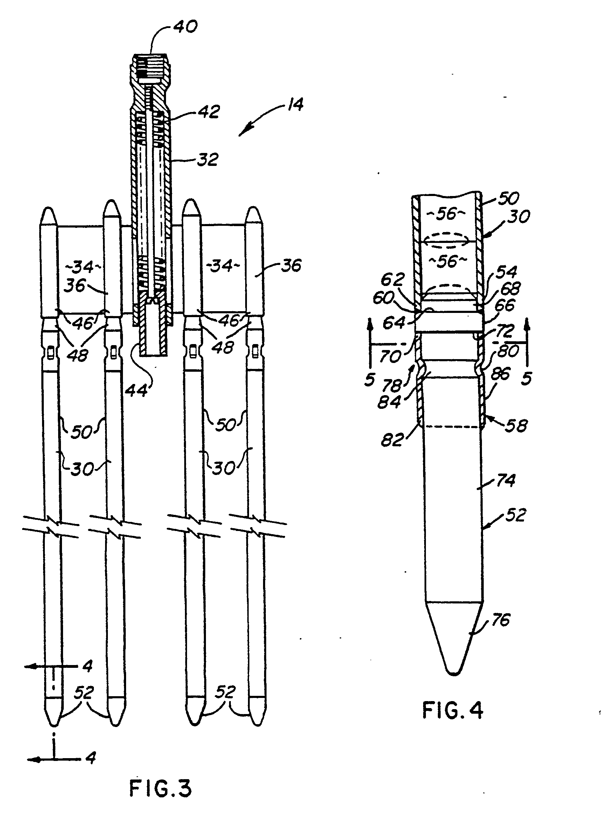

As best seen from Figs. 2 and 3, the spider assembly 14 comprises a central hub 32, a plurality of vanes 34 extending radially outward from the hub 32, and a plurality of fingers 36 on the vanes 34, each of which has one of the control rods 30 connected thereto. Preferably, the central hub 32 is in the form of a tube having on its upper end an internally threaded segment 40 for connection to the drive mechanism (not shown) which is operable to raise and lower the spider assembly 14 together with the control rods 30 supported therefrom. The tubular hub 32 houses a common load absorbing mechanism comprising a coil spring 42 held in a state of compression, and a nipple 44 adapted to seat in a shallow cavity (not shown) provided in the top surface of the core plate 12 to assist in proper alignment of the control rods 30 with the core plate passages 28 and the guide thimbles 18. The primary purpose of the load absorbing mechanism is to prevent shock loading of the core plate 12 and of the fuel assembly 10 as the spider assembly 14 abuts the top of the core plate 12 upon full insertion of the control rods 30 into the guide thimbles 18.

Each control rod 30 is supported from one of the fingers 36 of the spider assembly 14, each finger 36 having in its lower end portion 46 an internally threaded axial opening for threadedly receiving an upper end portion 48 of the associated control rod 30. Each control rod 30 includes a tubular cladding member 50 and an end plug 52 affixed to the lower end 54 (see Fig. 4) of the cladding member. In some control rod designs, the cladding contains neutron absorbing material in the form of pellets, such as pellets 56 stacked end-to-end, whereas other control rod designs adapt the control rods for use as displacer rods employed for controlling the reactor through displacement of some of the neutron moderating coolant therein, as described in the above-mentioned U.S. Patent Specification No. 4,432,934.

As mentioned hereinbefore, the power level of a reactor is usually regulated by the insertion and withdrawal of control rods, such as rods 30, into and from the guide thimbles, the control rods being fully inserted during reactor shutdown, and some of them being withdrawn when the reactor is operating at full power. "Withdrawn" in this context is to be understood as meaning that the control rods 30 are not withdrawn from the guide thimbles 18 completely but still extend into them a short distance, such as about 15 cm.

When the control rods 30 are fully inserted into the guide thimbles 18 and, thus, within the reactor core (not shown), they are subject to the generation of heat, wherefore provision is made for cooling them in order to prevent the pellets therein from melting. Typically, the lower portions of the guide thimbles are, for this purpose, provided with openings (not shown) enabling some of the pumped reactor coolant entering the bottom of the fuel assembly 10 to be diverted into the thimbles 18 and to flow upward therein over the control rods 30. As previously mentioned herein, this flow of coolant through the thimbles 18 and past the end portion therein of the control rods, particularly when the latter are in their withdrawn positions, tends to induce vibratory motion in the lower ends of the rods.

Heretofore, the vibratory contact has taken place at the interface of dissimilar materials and excessive wear has occurred as a result. For instance, in some reactors, stainless steel tips of control rods vibrate against Zircaloy thimbles, thereby producing excessive wear of the thimble walls. In other reactors, the thimbles are made of stainless steel and the control rods of Zircaloy. Irrespective of which material is used to fabricate which part, it is vibratory contact between dissimilar materials which causes excessive wear.

Referring now to Figs. 4 and 5, the invention provides a wear sleeve 58 at the contact interface of the control rod 30 with the guide thimble 18, which wear sleeve is composed of the same material as the guide thimble. In the illustrated embodiment, it is assumed that the guide thimble 18 is made of stainless steel whereas the cladding 50 and the end plug 52 of the control rod 30 are made of Zircaloy; therefore, the wear sleeve 58 is made of stainless steel.

As in the past, the end plug 52 is rigidly attached and sealed to the lower end 54 of the cladding member 50 by a girth weld 60. However, the weld 60 is formed at the circumferential location of contact between the lower edge 62 of the cladding member 50 and a shoulder 64 formed on the end plug 52 at the merger of a narrow annular segment 66 and an inner end 68 of the plug. The outside diameter of the plug segment 66 is substantially the same as the outside diameter of the cladding member 50.

As seen in Fig. 4, the wear sleeve 58 is mounted on the end plug 52 in a position where an inner end 70 of the sleeve abuts another shoulder 72 on the end plug 52 spaced a short distance from the girth weld 60. The shoulder 72 is formed at the merger of the annular segment 66 and an elongate body portion 74 of the end plug, which body portion has an outside diameter generally the same as that of the inner end portion 68 of the plug, which is slightly less than the inside diameter of the cladding member 50. The wear sleeve 58 which thus encircles the elongate body portion 74 of the end plug (see Fig. 5) extends from the annular segment, or radial flange, 66 for about one-third of the length of the body portion 74 toward the tapered end 76 of the plug 52, as seen in Fig. 4. The wear sleeve 58 has substantially the same outside diameter as the cladding member 50.

The sleeve 58 is affixed to the end plug 52 through an interlock connection, generally designated 78, which comprises a circumferential groove 84 suitably formed in the plug body 74 at a location spaced from the shoulder 72, and a single circumferential inward bulge 80 formed, e.g., swaged or mechanically rolled, on the sleeve 58 at a location such as to interlock with the groove 84. A single protuberance 80 is desirable in order to eliminate axial thermal mismatch between the dissimilar materials of the sleeve 58 and the plug 52. Also, an interlock connection is used, rather than a weld, because of the difficulty of welding dissimilar materials together.

Although the wear sleeve 58 is shown herein in complete surface-to-surface contact with the end plug 52, it may be desirable to provide therebetween a small radial gap permitting some lateral relative movement between the sleeve and the plug. When in use, some of the coolant flowing through the guide thimble will enter the radial gap between the sleeve and the end plug and there serve to dampen vibratory impacts.

It will be appreciated that with the arrangement according to the invention, any wear resulting from vibratory impacts upon the thimble wall will be minimized due to the wear sleeve 58 consisting of a similar material as the guide thimble, namely, in the described embodiment, stainless steel.

## Claims

1. A control rod for use in a nuclear reactor having means for supporting the control rod for axial movement thereof in a guide thimble, said control rod including a cladding member (5e) and an end plug which is affixed to the lower end of the cladding member, said end plug being located within the guide thimble when in use, and striking the guide thimble upon lateral vibration of the control rod, characterized in that said end plug (52) has thereon a wear sleeve (58) which provides a contact interface between the end plug and the guide thimble (18) and is formed of the same material as the guide thimble.

2. A control rod according to claim 1, characterized in that said material is dissimilar to the material of the end plug (52), said sleeve (58) being affixed to the latter by means of an interlock connection (78).

3. A control rod according to claim 2, characterized in that said interlock connection (78) comprises an annular groove (84) formed in the peripheral surface of the end plug (52), and a single peripheral bulge (80) formed on the inner surface of said sleeve (58) and lodged in said annular groove (84).

4. A control rod according to claim 1, 2 or 3, wherein said guide thimble has liquid coolant flowing therethrough when the nuclear reactor is in operation, characterized in that said sleeve (58) and said end plug (52) have therebetween a radial gap sufficient for liquid coolant to enter therein and to dampen impacts between the sleeve and the guide thimble.

## Patentansprüche

1. Steuerstab zum Einsatz in einem Kernreaktor mit Mitteln zur Halterung des Steuerstabs für eine axiale Bewegbarkeit desselben in einem Führungsrohr, wobei der Steuerstab ein Umhüllungsteil (5a) und eine Endkappe aufweist, die am unteren Ende des Umhüllungsteils befestigt ist und im Gebrauch sich innerhalb des Führungsrohrs befindet sowie bei seitlichen Schwingungen des Steuerstabs am Führungsrohr anschlägt, dadurch gekennzeichnet, daß die Endkappe (52) eine Verschleißhülse (58) trägt, welche ein Berührungszwischenteil zwischen der Endkappe und dem Führungsrohr (18) bildet und aus dem gleichen Material wie das Führungsrohr hergestellt ist.

2. Steuerstab nach Anspruch 1, dadurch gekennzeichnet, daß das Material von dem Material der Endkappe (52) verschieden ist und die Hülse (58) mittels einer Formschlußverbindung (78) an der Endkappe befestigt ist.

3. Steuerstab nach Anspruch 2, dadurch gekennzeichnet, daß die Formschlußverbindung (78) durch eine in der Umfangsfläche der Endkappe (52) gebildete Ringnut (84) und eine einfache umfangsmäßige Sicke (80) an der Innenfläche der Hülse (58), die in die Ringnut (84) eingreift, hergestellt ist.

4. Steuerstab nach Anspruch 1, 2 oder 3, wobei das Führungsrohr bei in Betrieb befindlichem Kernreaktor von flüssigem Kühlmittel durchströmt ist, dadurch gekennzeichnet, daß die Hülse (58) und die Endkappe (52) zwischen sich einen ausreichenden Radialspalt zum Eintritt von Kühlmittel und zum Däpfen von Schlägen zwischen der Hülse und dem Führungsrohr bilden.

## Revendications

1. Barre de commande à utiliser dans un réacteur nucléaire ayant un moyen pour supporter la barre de commande afin qu'elle se déplace axialement dans une chaussette de guidage, ladite barre de commande comportant un revêtement (50) et un bouchon terminal fixé à l'extrémité inférieure du revêtement, ledit bouchon terminal étant situé à l'intérieur de la chaussette de guidage pendant le fonctionnement et heurtant la chaussette de guidage lors de vibrations latérales de la barre de commande, caractérisée en ce que sur ledit bouchon terminal (52) se trouve un manchon d'usure (58) qui assure un contact mutual entre le bouchon terminal et la chaussette de guidage (18) et qui est fait de la même matière que la chaussette de guidage.

2. Barre de commande selon la revendication 1, caractérisée en ce que ladite matière est différente de la matière du bouchon terminal (52), ledit manchon (58) étant fixé à ce dernier à l'aide d'un assemblage de verrouillage (78).

3. Barre de commande selon la revendication 2, caractérisée en ce que ledit assemblage de verrouillage (78) comporte une gorge annulaire (84) formée dans la surface périphérique du bouchon terminal (52) et une unique saillie périphérique (80) formée sur la surface interne dudit manchon (58) et logée dans ladite gorge annulaire (84).

4. Barre de commande selon la revendication 1, 2 ou 3, dans laquelle ladite chaussette de guidage est parcourue par un réfrigérant liquide quand le réacteur nucléaire est en fonctionnement, caractérisée en ce que ledit manchon (58) et ledit bouchon terminal (52) ont entre eux un intervalle radial suffisant pour que le réfrigérant liquide y entre et amortisse les chocs entre le manchon et la chaussette de guidage.

FIG. 1

FIG. 2

FIG. 5

FIG.3

FIG.4

3